(19) Europäisches Patentamt
European Patent Office
Office européen des brevets

(11) EP 4 036 138 A1

(12) **EUROPEAN PATENT APPLICATION**

(43) Date of publication:
**03.08.2022 Bulletin 2022/31**

(21) Application number: **21154030.7**

(22) Date of filing: **28.01.2021**

(51) International Patent Classification (IPC):
***C08G 18/48*** *(2006.01)* ***C08G 18/76*** *(2006.01)*
***C08G 18/67*** *(2006.01)* ***C08J 3/24*** *(2006.01)*
***C08K 5/14*** *(2006.01)* ***C08L 75/14*** *(2006.01)*
***C08L 75/16*** *(2006.01)*

(52) Cooperative Patent Classification (CPC):
(C-Sets available)
**C08G 18/7664; C08G 18/672; C08K 5/14; C08L 75/16** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **A METHOD FOR STABLY STORING AN ISOCYANATE COMPOSITION**

(57) The present invention relates to a method for stably storing an isocyanate composition, the stably stored isocyanate composition and a polyurethane reaction system comprising the isocyanate composition.

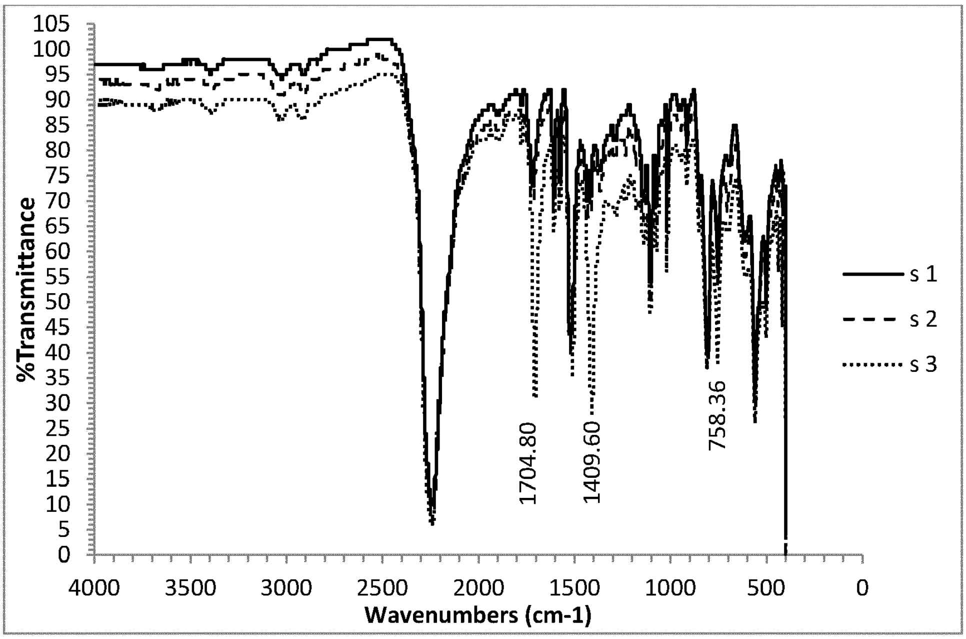


Fig. 1

EP 4 036 138 A1

(52) Cooperative Patent Classification (CPC): (Cont.)

C-Sets
**C08G 18/672, C08G 18/4829**

## Description

### Technical Field

The present invention relates to a method for stably storing an isocyanate composition, a stably stored isocyanate composition, and a polyurethane resin produced from the isocyanate composition.

### Background Technology

The trimerization catalytic reaction of isocyanates is a curing and crosslinking process commonly used in the application field of polyurethane materials. The six-membered ring rigid structure of the isocyanurate generated by trimerization can provide high crosslinking degree to enhance the mechanical strength of the cured polyurethane material, and meanwhile, due to the excellent flame retardance generated by the high carbon-nitrogen-oxygen content and the conjugated aromatic structure of the six-membered ring of the isocyanurate, it can also help to improve the overall flame retardance of the polyurethane material. For these reasons, the trimerization reaction of isocyanate functional groups is widely used in the field of polyurethane materials. Generally, the occurrence of the trimerization reaction of isocyanates needs to perform in the presence of a trimerization catalyst. We have found that in the presence of a free-radical initiator, even in the absence of a trimerization catalyst, the isocyanate can also be trimerized, that is to say, an isocyanate composition to which a free radical initiator is added will not be stably stored because of the trimerization reaction. It is not yet known in the art how to make the trimerization reaction of isocyanates in which a free radical initiator is added slower or inhibited and to control the trimerization reaction of isocyanates to not occur or to occur more controllably, so that the corresponding isocyanate compositions are stably stored.

CN109694460A discloses an isocyanate trimer having polyfunctional unsaturated groups, wherein each of A, B, C independently represents an aliphatic group, an aromatic group, an amido group, a lactone or ester group, an alcohol ether or phenolic ether group, preferably a di-substituted benzene group, a substituted formate group, a cycloalkyl group, a linear alkane group, each of which has 1-15 carbon atoms. CN1036404C discloses a thermoplastic polyurethane elastomer interpenetrating network adhesive. It comprises a thermoplastic polyurethane elastomer obtained by synthesis from an active double-bond containing acrylate monomer, an organic isocyanate, a linear polyester and an initiator and a catalyst, and a solvent and a modifier thereof.

CN110078881A relates to a polymer expansion material under a permeation or seepage waterish environment and a preparation process thereof, belonging to the technical field of polymer expansion foam materials. It comprises raw materials in parts by weight as follows: 20-30 parts of rosin polyester polyol, 20-50 parts of isocyanate, 20-40 parts of PhireGuard MB-512, 5-10 parts of 1,1-dichloro-1-fluoroethane, 1-2 parts of surfactant, 0.01-1 part of catalyst, and 0.01 part of benzoyl chloride.

CN109810237A discloses a single slurry load-bearable reaction material and a preparation method thereof, the prepared single slurry load-bearable reaction material is flame retardant, has low viscosity, is suitable for most general fluid conveying equipment, can bear the load, and is convenient for underground pipeline seepage repair in water environment, and is particularly convenient for the non-excavation underground pipeline seepage repair in water environment.

Despite the above disclosures, there is still a great need in the art for a method of stably storing an isocyanate composition.

### Summary of the Invention

In one aspect of the present invention, there is provided a method for stably storing an isocyanate composition comprising the following components:

A1) one or more polyisocyanates;

A2) at least one free-radical initiator;
Said method is to add A3) at least one acyl chloride to the isocyanate composition.

Preferably, said polyisocyanate is selected from aromatic isocyanate, preferably diphenylmethane diisocyanate, toluene diisocyanate, diphenylmethane diisocyanate or a combination thereof, particularly preferably diphenylmethane diisocyanate or (poly)diphenylmethane diisocyanate.

Preferably, the content of said A2) free-radical initiator is 0.1-5 wt%, preferably 0.2-4 wt%, more preferably 0.4-3 wt%, based on 100 wt% of the total weight of the isocyanate composition.

Preferably, the content of said A3) at least one acyl chloride is 0.001-3.5 wt%, preferably 0.003-3.0 wt%, more

preferably 0.005-2.0 wt%, based on 100 wt% of the total weight of the isocyanate composition.

Preferably, said A3) at least one acyl chloride is selected from formyl chloride, acetyl chloride, benzoyl chloride, benzenedicarbonyl dichloride, oxalyl chloride, chloroacetyl chloride, trichloroacetyl chloride, trifluoroacetyl chloride or a combination thereof.

Preferably, the isocyanate composition containing at least one acyl chloride has a prolonged stable storage time at 50°C of ≥ 5 days, preferably ≥ 7 days, more preferably ≥ 14 days than the isocyanate composition not containing at least one acyl chloride.

In a further aspect of the present invention, there is provided an isocyanate composition, comprising:

A1) one or more polyisocyanates;

A2) at least one free-radical initiator;

A3) at least one acyl chloride.

Preferably, said polyisocyanate is selected from aromatic isocyanate, preferably diphenylmethane diisocyanate, toluene diisocyanate, diphenylmethane diisocyanate or a combination thereof, particularly preferably diphenylmethane diisocyanate or (poly)diphenylmethane diisocyanate.

Preferably, the content of said A2) free-radical initiator is 0.1-5 wt%, preferably 0.2-4 wt%, more preferably 0.4-3 wt%, based on 100 wt% of the total weight of the isocyanate composition.

Preferably, the content of said A3) at least one acyl chloride is 0.001-3.5 wt%, preferably 0.003-3.0 wt%, more preferably 0.005-2.0 wt%, based on 100 wt% of the total weight of the isocyanate composition.

Preferably, said A3) at least one acyl chloride is selected from formyl chloride, acetyl chloride, benzoyl chloride, benzenedicarbonyl dichloride, oxalyl chloride, chloroacetyl chloride, trichloroacetyl chloride, trifluoroacetyl chloride or a combination thereof.

Preferably, the isocyanate composition containing at least one acyl chloride has a prolonged stable storage time at 50°C of ≥ 7 days, preferably ≥ 14 days, more preferably ≥ 20 days than the isocyanate composition not containing at least one acyl chloride.

In a further aspect of the present invention, there is provided the use of acyl chloride in inhibiting the trimerization of isocyanates catalyzed by a free-radical initiator. Said use is to add at least one acyl chloride to an isocyanate composition comprising the following components:

A1) one or more polyisocyanates;

A2) at least one free-radical initiator.

Preferably, the content of said A3) at least one acyl chloride is 0.001-3.5 wt%, preferably 0.003-3.0 wt%, more preferably 0.005-2.0 wt%, based on 100 wt% of the total weight of the isocyanate composition.

Preferably, said A3) at least one acyl chloride is selected from formyl chloride, acetyl chloride, benzoyl chloride, benzenedicarbonyl dichloride, oxalyl chloride, chloroacetyl chloride, trichloroacetyl chloride, trifluoroacetyl chloride or a combination thereof.

In a further aspect of the present invention, there is provided a method for preparing a polyurethane resin, reacting a polyurethane reaction system comprising the following components to prepare the polyurethane resin:

Component A), comprising:

A1) one or more polyisocyanates;

A2) a free-radical initiator;

A3) at least one acyl chloride;

Component B), comprising:

B1) one or more organic polyols, the content of the organic polyol is 21-60 wt%, based on 100 wt% of the total weight of the polyurethane reaction system;

B2) one or more compounds having the structure of formula (I)

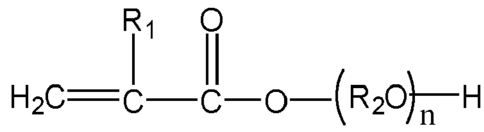

I ,

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

Preferably, the content of said B2) is 4-33 wt%, based on 100 wt% of the total weight of the polyurethane reaction system.

Preferably, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the organic polyol is selected from those having the functionality of 1.7-6, preferably 1.9-4, more preferably 1.9-2.8 and the hydroxyl value of 150-1100 mgKOH/g.

Preferably, said A3) at least one acyl chloride is selected from formyl chloride, acetyl chloride, benzoyl chloride, benzenedicarbonyl dichloride, oxalyl chloride, chloroacetyl chloride, trichloroacetyl chloride and trifluoroacetyl chloride.

Preferably, the polyurethane reaction system has a pot-life at 35°C of ≥ 60 minutes, preferably ≥ 65 minutes, more preferably ≥ 70 minutes.

Preferably, compared to the pot-life at 35°C of the polyurethane reaction system not comprising at least one acyl chloride, the stability in the pot-life at 35°C of the polyurethane reaction system comprising at least one acyl chloride is increased by ≥ 30%, preferably ≥ 40%, more preferably ≥ 50%.

In a further aspect of the present invention, there is provided a polyurethane reaction system, comprising:

Component A), comprising:

A1) one or more polyisocyanates;

A2) a free-radical initiator;

A3) at least one acyl chloride;

Component B), comprising:

B1) one or more organic polyols, the content of the organic polyol is 21-60 wt%, based on 100 wt% of the total weight of the polyurethane reaction system;

B2) one or more compounds having the structure of formula (I)

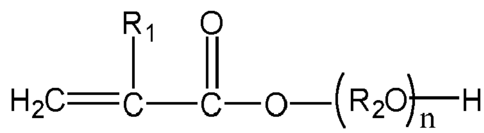

I ,

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

In a further aspect of the present invention, there is provided the use of acyl chloride for improving the stability in the pot-life of a polyurethane reaction system.

Preferably, said acyl chloride is selected from formyl chloride, acetyl chloride, benzoyl chloride, benzenedicarbonyl dichloride, oxalyl chloride, chloroacetyl chloride, trichloroacetyl chloride, trifluoroacetyl chloride or a combination thereof.

Preferably, the polyurethane reaction system comprises:

Component A), comprising:

A1) one or more polyisocyanates;

A2) a free-radical initiator;

A3) at least one acyl chloride;

Component B), comprising:

B1) one or more organic polyols, the content of the organic polyol is 21-60 wt%, based on 100 wt% of the total weight of the polyurethane reaction system;

B2) one or more compounds having the structure of formula (I)

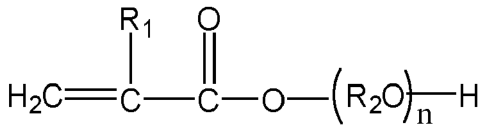

I ,

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

In a further aspect of the present invention, there is provided a method for stabilizing the pot-life of a polyurethane reaction system comprising the following components:

Component A), comprising:
A1) one or more polyisocyanates;

Component B), comprising:

B1) one or more organic polyols, the content of the organic polyol is 21-60 wt%, based on 100 wt% of the total weight of the polyurethane reaction system;

B2) one or more compounds having the structure of formula (I)

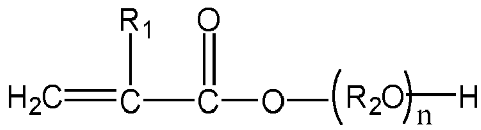

I ,

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6; and Component C), a free-radical initiator;
The method is to add the component D) at least one acyl chloride to the polyurethane reaction system, preferably to the component A) and/or the component B).

Preferably, the content of said B2) is 4-33 wt%, based on 100 wt% of the total weight of the polyurethane reaction system.

Preferably, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the organic polyol is selected from those having the functionality of 1.7-6, preferably 1.9-4, more preferably 1.9-2.8 and the hydroxyl value of 150-1100 mgKOH/g.

Preferably, the component D) at least one acyl chloride is selected from formyl chloride, acetyl chloride, benzoyl chloride, benzenedicarbonyl dichloride, oxalyl chloride, chloro-acetyl chloride, trichloro-acetyl chloride and trifluoro-acetyl chloride, preferably benzoyl chloride.

Preferably, the polyurethane reaction system has a pot-life at 35°C of ≥ 60 minutes, preferably ≥ 65 minutes, more preferably ≥ 70 minutes.

Preferably, compared to the pot-life at 35°C of the polyurethane reaction system not comprising at least one acyl chloride, the stability in the pot-life at 35°C of the polyurethane reaction system comprising at least one acyl chloride is increased by ≥ 30%, preferably ≥ 40%, more preferably ≥ 50%.

Preferably, the content of said D) at least one acyl chloride is 0.001-3.5 wt%, preferably 0.003-3.0 wt%, more preferably 0.005-2.0 wt%, based on 100 wt% of the total weight of the component A).

In a further aspect of the present invention, there is provided a polyurethane resin obtained by the method for preparing a polyurethane resin according to the present invention as described above.

In a further aspect of the present invention, there is provided a polyurethane product comprising the polyurethane resin according to the present invention, characterized in that the polyurethane product is selected from cable trays, frames of doors, windows and curtain walls, frames of ladders, tent poles or pipes, anti-glare shields, floors, sucker rods, telegraph poles and cross arms, guardrails, gratings, architectural sectional materials, container sectional materials and sheets, bike racks, fishing rods, cable cores, insulator core rods, antenna housings, single-layer or sandwiched continuous sheets, and blade shells, webs, spar caps, auxiliary spars and blade roots of turbine fan blades.

As mentioned above, isocyanates to which a free radical initiator is added are susceptible to the trimerization reaction to form (poly) isocyanurates, and it is observed that the free radical initiator catalyzes the trimerization reaction. If the free-radical initiator is mixed directly into the isocyanate, this has an adverse effect on the transport and long-term storage of the isocyanate mixture. Especially under the condition of direct sunlight at high temperature in summer, the internal temperature of a common van-type transport vehicle in a sealed environment can reach 50-60°C, so that the trimerization reaction of isocyanates can be promoted to occur in advance, and the quality of the isocyanate product is influenced. During some long maritime transports, ships may travel near the tropical equator for several weeks, and under such long term high temperature conditions, it is more difficult to ensure the quality of the isocyanate mixture to which the free radical initiator is added.

Surprisingly, we have found that the addition of an appropriate amount of acyl chloride to the isocyanate mixture is effective in prolonging the storage time without having to worry about the quality problem during the transportation process even under tropical weather conditions. It can be seen from the experimental data that the time period for stably storing the isocyanate composition with the addition of acyl chloride is greatly extended. In a preferred embodiment of the present invention, a proper amount of acyl chloride will give the effect of better and longer stable storage. For example, in a certain range, the higher the content of acyl chloride is, the better the effect of stably storing will be.

More surprisingly, we have found that the isocyanate composition of the present invention comprising an isocyanate, a free radical initiator and an acyl chloride can achieve a stable pot-life after the addition of the isocyanate-reactive component, that is, the polyurethane reaction systems of the present invention comprising an acyl chloride and an isocyanate composition, a polyol and the like suitable thereto, have a stable pot-life. Therefore, the polyurethane product with more uniform filling and excellent quality can be prepared; the production efficiency and the finished product rate can be improved; and the raw materials are saved and the cost is saved.

At the same time, we have found that the addition of acyl chloride to the polyurethane reaction system, either to the isocyanate component or to the isocyanate-reactive component, can stabilize the pot-life of the polyurethane reaction system. That is to say, whether or not the isocyanate component or the isocyanate-reactive component of the present invention has been stored and transported for an extended period of time, the addition of acyl chloride suitable thereto allows the polyurethane reaction system of the present invention to achieve a stable pot-life.

The method of the present invention simply and efficiently realizes the stable storage of the isocyanate composition, thereby simplifying the production process of the polyurethane resin, in particular the polyurethane resin for producing the large manufactured product such as fan blades and the like, and the polyurethane composite, and improving the production efficiency thereof. In particular, the method for stably storing an isocyanate composition, the isocyanate composition, the polyurethane reaction system and the method for preparing the polyurethane resin according to the present invention solve the difficult problems in the art, realize a relatively long and stable pot-life, and further improve the production efficiency and the finished product rate of the related large polyurethane manufactured products, such as fan blades and ships, thereby promoting the commercialization of related industry innovations and the vigorous development of business.

## Brief description of the drawings

The invention is illustrated in the following description with reference to the drawings:

Figure 1 shows infrared spectra of Examples and Comparative Examples of the present invention. In the figure, curve s1 in Figure 1 represents the spectrum of the system only containing the isocyanate 44V20; curve s2 in Figure 1 represents the spectrum in the initial stage after 2 wt% of TBPB was added to the isocyanate 44V20 based on the total weight of the isocyanate, where the viscosity had not changed yet; curve s3 in Figure 1 represents the spectrum after 56 days from the addition of 2 wt% of TBPB to the isocyanate 44V20 based on the total weight of the isocyanate.

**Detailed description of the invention**

The following terms used in the present invention have the following explanations or interpretations.

Pbw, part by weight, refers to the mass parts of each component in the reaction system;

Functionality, refers to the value determined according to the industry formula: functionality=hydroxyl value*molecular weight/56 100; wherein the molecular weight is determined by the GPC high performance liquid chromatography; Isocyanate index, refers to the value calculated by the following formula:

Isocyanate index (%) = (the mole number of isocyanate groups (NCO groups) in Component A)/(the mole number of isocyanate group-reactive groups in Component B)×100%.

As mentioned above, the present invention provides a method for stably storing an isocyanate composition, which method is to add A3) at least one acyl chloride to the isocyanate and the free radical initiator. The isocyanate composition of the present invention comprises:

A1) one or more polyisocyanates;

A2) a free-radical initiator;

A3) at least one acyl chloride.

The polyurethane reaction system of the present invention comprises the following components:

Component A), comprising:

- A1) one or more polyisocyanates;
- A2) a free-radical initiator;
- A3) at least one acyl chloride;

Component B), comprising:

- B1) one or more organic polyols, the content of the organic polyol is 21-60 wt%, based on 100 wt% of the total weight of the polyurethane reaction system;
- B2) one or more compounds having the structure of formula (I)

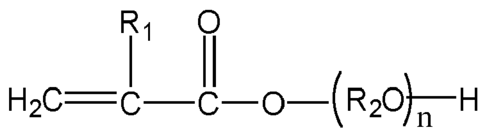

I ,

Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

Specifically, any organic polyisocyanate, including aromatic, aliphatic and alicyclic polyisocyanates and a combination thereof, can be used in the above-mentioned method of the present invention. The polyisocyanate may be represented by a general formula $R(NCO)_n$, wherein R represents an aliphatic hydrocarbon group having 2-18 carbon atoms, an aromatic hydrocarbon group having 6-15 carbon atoms, and an araliphatic hydrocarbon group having 8-15 carbon atoms, and n = 2-4.

Usable polyisocyanates comprise, preferably, but are not limited to ethylene diisocyanate, tetramethylene 1,4-diisocyanate, hexamethylene diisocyanate (HDI), dodecylene 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane-2,4-diisocyanate, perhydro-diphenylmethane-4,4-diisocyanate, phenylene-1,3-diisocyanate, phenylene-1,4-diisocyanate, stilbene-1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), mixtures of diphenylmethane diisocyanate and/or diphenylmethane diisocyanate homologues having more rings, polyphenylmethane polyisocyanate (polymeric MDI), naphthylene-1,5-diisocyanate (NDI), their isomers, and any mixture of them and their isomers.

Usable polyisocyanates also comprise isocyanates obtained by modification with a carbodiimide, an allophanate or the like, and are preferably, but not limited to diphenylmethane diisocyanate, carbodiimide modified diphenylmethane diisocyanate, their isomers, and any mixture of them and their isomers.

When used in the present invention, polyisocyanates comprise isocyanate dimers, trimers, tetramers, or a combination thereof.

In some embodiments of the present invention, the isocyanate is selected from aromatic isocyanates, preferably diphenylmethane diisocyanate, toluene diisocyanate, diphenylmethane diisocyanate or a combination thereof, particularly preferably diphenylmethane diisocyanate or (poly)diphenylmethane diisocyanate.

In a preferred embodiment of the present invention, the polyisocyanate component is selected from polymeric MDIs.

The NCO content of the organic polyisocyanate of the present invention is 20-33 wt%, preferably 25-32 wt%, particularly preferably 30-32 wt%. The NCO content is determined by GB/T12009.4-2016.

The organic polyisocyanates can also be used in the form of polyisocyanate prepolymers. These polyisocyanate prepolymers can be obtained by reacting an excess of the above-mentioned organic polyisocyanate with a compound having at least two isocyanate-reactive groups at a temperature of for example 30-100°C, preferably about 80°C. The NCO content of the polyisocyanate prepolymer of the present invention is 20-33 wt%, preferably 25-32 wt%. The NCO content is determined by GB/T12009.4-2016.

The free-radical initiator refers to an agent capable of generating free radicals in a free radical reaction. It is also referred to as a free radical initiator. The process of generating free radicals is called the chain initiation. The free radical initiator that can be used in the present invention includes, but is not limited to, peroxide initiators, azo initiators, redox initiators and the like, and the peroxide initiator is further divided into organic peroxide initiators and inorganic peroxide initiators.

The organic peroxide compound has a structural general formula of R-O-O-H or R-O-OR, wherein R is an alkyl group, an acyl group, a carbonate ester group and the like. It further comprises: acyl peroxides, for example: benzoyl peroxide, lauroyl peroxide; hydroperoxides, for example: cumene hydroperoxide, tert-butyl hydroperoxide; dialkyl peroxides, for example: di-tert-butyl peroxide, diisopropylbenzene hydroperoxide; ester peroxides, t-butyl peroxybenzoate, tert-butyl peroxypivalate; ketone peroxides, for example: methyl ethyl ketone peroxide, cyclohexanone peroxide; dicarbonate peroxides, for example: diisopropyl peroxydicarbonate, dicyclohexyl peroxydicarbonate.

The azo initiator can be selected from azodiisobutyronitrile, azodiisoheptylonitrile or a combination thereof.

Acyl chloride of the present invention refers to a compound containing a carbonyl chloride functional group, belongs to the category of acyl halide, and is a carboxylic acid derivative formed by replacing hydroxyl in carboxylic acid with chlorine. Generally, acyl chloride can be prepared by reacting thionyl chloride, phosphorus trichloride, or phosphorus pentachloride with carboxylic acid. Among others, thionyl chloride is commonly used, because the products sulfur dioxide and hydrogen chloride are both gases, and therefore the separation is easy, the purity is good, and the yield is high. Thionyl chloride has a boiling point of only 79°C and a slight excess of thionyl chloride can be separated off by distillation. The reaction for preparing acyl chloride with thionyl chloride can be catalyzed by dimethyl formamide.

Furthermore, oxalyl chloride can be used as the chlorinating reagent and reacted with carboxylic acid to prepare acyl chloride. Dimethyl formamide is used to perform the catalysis. The first step is a reaction of dimethyl formamide with oxalyl chloride to form an active imide salt intermediate. Then carboxylic acid is reacted with this intermediate to form acyl chloride, and retrieve dimethyl formamide. Acyl chloride can also be obtained through the Appel reaction of carboxylic acid, carbon tetrachloride and triphenylphosphine. Carboxylic acid can also be used to react with cyanuric chloride to form acyl chloride.

Acyl chloride suitable for the present invention comprises, but is not limited to formyl chloride, acetyl chloride,

benzoyl chloride (CAS No. 98-88-4), benzenedicarbonyl dichloride, oxalyl chloride, chloroacetyl chloride, trichloroacetyl chloride, trifluoroacetyl chloride, or a combination thereof.

The polyol that can be used in the present invention may be polyether polyols, polyester polyols, polycarbonate polyols, and/or mixtures thereof. Preference is given to one or more polyether polyols having the functionality of 2-8, preferably 3-6 and the hydroxyl value of 50-1200, preferably 200-800.

Examples of polyether polyols that can be used in the present invention are aromatic amine-initiated polyether polyols, including propylene oxide-based polyether polyols initiated with diphenylmethane diamine. A part of polyether polyols useful in the present invention are selected from glycerol, propylene glycol, sucrose, sorbitol-initiated polyether polyols.

Said polyester polyol is prepared by reacting dicarboxylic acid or dicarboxylic anhydride with polyol. The dicarboxylic acid is preferably, but not limited to, an aliphatic carboxylic acid containing 2-12 carbon atoms, for example, succinic acid, malonic acid, glutaric acid, adipic acid, suberic acid, azelaic acid, sebacic acid, lauryl acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol is preferably, but not limited to, ethylene glycol, diethylene glycol, 1,2-propylene glycol, 1,3-propylene glycol, dipropylene glycol, 1,3-methylpropylene glycol, 1,4-butylene glycol, 1,5-pentylene glycol, 1,6-hexylene glycol, neopentyl glycol, 1,10-decanediol, glycerol, trimethylolpropane or mixtures thereof. The polyester polyol also comprises a polyester polyol prepared from lactone. The polyester polyol prepared from lactone is preferably, but not limited to, a polyester polyol prepared from ε-caprolactone.

The polycarbonate polyol is preferably, but not limited to polycarbonate diol. The polycarbonate diol may be prepared by reacting a diol with a dihydrocarbyl or diaryl carbonate or phosgene. The diol is preferably, but not limited to 1,2-propylene glycol, 1,3-propylene glycol, 1,4-butylene glycol, 1,5-pentylene glycol, 1,6-hexylene glycol, diethylene glycol, trioxymethylene glycol or a mixture thereof. The dihydrocarbyl or diaryl carbonate is preferably, but not limited to, diphenyl carbonate.

Optionally, the polyurethane reaction system of the present invention also comprises B2) one or more compounds having the structure of formula (I)

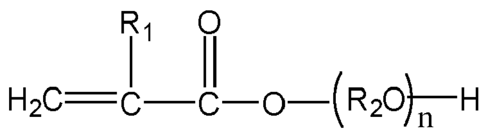

I ,

Wherein, $R_1$ is selected from hydrogen, methyl or ethyl; $R_2$ is selected from an alkylene group having 2-6 carbon atoms; n is an integral number selected from 1-6.

In a preferred embodiment of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-bis(4-phenylene)-propane, 1,4-dimethylenebenzene, 1,3 -dimethylenebenzene, 1,2-dimethylenebenzene.

Preferably, said B1) is selected from an organic polyol, wherein the organic polyol is selected from those having the functionality of 1.7-6, preferably 1.9-4.5, and the hydroxyl value of 150-1100 mgKOH/g, preferably 150-550 mgKOH/g.

In a preferred embodiment of the present invention, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) may be prepared by conventional methods in the art, for example may be prepared by the esterification reaction of (meth)acrylic anhydride or (meth)acrylic acid, (meth)acryloyl halide compounds and HO-$(R_2O)_n$H. Those skilled in the art are familiar with these preparation methods, for example, as explained in "Manual of Polyurethane Raw Materials and Additives" (Liu Yijun, published on 1st April 2005), Chapter III, and "Polyurethane Elastomer" (Liu Houjun, published in August 2012), Chapter II. The entire contents of these documents are incorporated herein by reference.

In the method for preparing a polyurethane resin of the present invention, in the addition polymerization reaction of an isocyanate group with a hydroxyl group, the isocyanate group can be an isocyanate group contained in the organic polyisocyanate (component A), or an isocyanate group contained in the intermediate product of the reaction of the organic polyisocyanate (component A) and the organic polyol (B1) component) or B2) component, the hydroxy group can be a hydroxy group contained in the organic polyol (B1) component) or B2) component, or a hydroxy group contained

in the intermediate product of the reaction of the organic polyisocyanate (component A) and the organic polyol (B1) component) or B2) component.

The free radical polymerization reaction of the present invention is an addition polymerization reaction of olefinic bonds, wherein the olefinic bonds may be an olefinic bond contained in B2) component or an olefinic bond contained in the intermediate product of the reaction of B2) component and the organic polyisocyanate.

In the method for preparing a polyurethane resin of the present invention, the polyurethane addition polymerization reaction (i.e., an addition polymerization reaction of the isocyanate group and the hydroxyl group) is simultaneously performed with the free radical polymerization reaction. As known to those skilled in the art, suitable reaction conditions can be selected to allow the polyurethane addition polymerization reaction and the free radical polymerization reaction to proceed successively, but the polyurethane matrix prepared in this way is structurally different from the polyurethane resin matrix prepared by allowing the polyurethane addition polymerization reaction and the free radical polymerization reaction to proceed simultaneously, so that the prepared polyurethane composites are different in mechanical properties and manufacturability.

Optionally, the above-mentioned polyurethane reaction system can also contain auxiliaries or additives comprising, but not limited to: filler, internal release agent, flame retardant, smoke suppressant, dye, pigment, antistatic agent, antioxidant, UV stabilizer, diluent, organic acid, inorganic acid, masking agent, organic ligand, defoamer, coupling agent, surface wetting agent, leveling agent, water-removing agent, catalyst, molecular sieve, thixotropic agent, plasticizer, foaming agent, foam stabilizing agent, foam stabilizer, free radical reaction suppressant, accelerator or a combination thereof, and these components may be optionally contained in the component A) isocyanate and/or the isocyanate-reactive component B) of the present invention. These components can also be stored separately as an additional component, and when used for the preparation of the polyurethane composite, are firstly mixed with the isocyanate component A) and/or the component B) of the present invention before the preparation. Accelerators that can be used in the present invention include cobalt salt accelerators which can simultaneously accelerate the polyurethane addition polymerization reaction and the free radical polymerization reaction.

In some embodiments of the present invention, the filler is selected from: aluminum hydroxide, bentonite, pulverized fuel ash, wollastonite, perlite powder, hollow microsphere, calcium carbonate, talcum powder, mica powder, porcelain clay, fumed silica, expandable microsphere, diatomite, volcanic ash, barium sulfate, calcium sulfate, glass microsphere, stone powder, wood flour, wood chip, bamboo powder, bamboo chip, rice grain, straw chips, sorghum straw chips, graphite powder, metal powder, thermosetting composite recycled powder, plastic particle or powder, or a combination thereof. Among others, the glass microspheres can be solid or hollow.

The internal release agent that can be used in the present invention comprises any release agent conventionally used for producing polyurethanes, and examples thereof include long-chain carboxylic acids, particularly fatty acids such as stearic acid, amines of long-chain carboxylic acids such as stearic amide, fatty acid esters, metal salts of long-chain carboxylic acids such as zinc stearate, or polysiloxanes.

Examples of flame retardants that can be used in the present invention include triaryl phosphates, trialkyl phosphates, triaryl phosphates or trialkyl phosphates with halogen, melamine, melamine resins, halogenated paraffins, red phosphorus, or combinations thereof.

Other auxiliaries that can be used in the present invention include water-removing agents such as molecular sieves; defoamers such as polydimethyl siloxane; coupling agents such as mono(ethylene oxide) or organic amine functional trialkoxysilane or combinations thereof. Coupling agents are particularly preferably for improving the adhesion of the resin matrix to the fiber-reinforced material. Fine particle fillers, such as clay and fumed silica, are commonly used as thixotropic agent.

Through repeated experiments, we have surprisingly found that the present invention can provide an isocyanate composition which is stably stored, a polyurethane reaction system having a stable reaction speed and a stable pot-life, and methods for stably storing an isocyanate composition and providing a polyurethane reaction system obtained a stable pot-life, thereby not only polyurethane resin and polyurethane composite materials with excellent quality can be obtained, but also the process can be simplified and the production efficiency can be improved. Meanwhile, the good product rate can also be improved, the waste of resources can be reduced and even avoided, and the present invention is more environment-friendly.

## Examples

Source of the raw materials:

Isocyanate 44V20: NCO%: 30.5-32.5%, viscosity: 160-240mPa•s@25°C, purchased from Covestro Polymers (China) Co., Ltd.;

T-butyl peroxybenzoate (TBPB): purchased from AkzoNobel;

Accelerator (NL-49P): purchased from AkzoNobel;

Benzoyl chloride: purchased from Shanghai Sinopharm;

Polyol 1: propylene oxide based polyether polyols, initiator component = glycerol, functionality = 3, hydroxyl value 350, purchased from Covestro Polymers (China) Co., Ltd.;

Hydroxypropyl methacrylate: purchased from Hersbit Chemical.

Each of test methods in Examples are explained as follows:

NCO content, refers to the content of the NCO groups in the system, and is measured by GB/T12009.4-2016 at room temperature.

Viscosity test: the test is performed at 25°C according to GB/T 12008.8-1992 Standard.

Pot-life, refers to the time from stirring the components of the reaction system uniformly until the viscosity reaches 600 mPa•S. The pot-life of the present invention is measured in the following manner: components of the polyurethane reaction system are treated at a constant temperature of 35°C respectively, and then mixed in the required proportion; the mixture is stirred for 1 minute until the mixture is mixed uniformly; under the temperature being maintained at 35°C, the viscosity of the mixture is measured once every 3 minutes with a viscometer, and the time required until the viscosity of the reaction system reaches 600 mPa•S, namely the pot-life, is recorded. The viscometer is a product from Brook-Field Corporation (Model Pro+DV-II).

Stable storage time: the isocyanate composition is tested for the NCO content and the viscosity according to the above methods (the sample to be tested is tested at the corresponding temperature or after being adjusted to the corresponding temperature), if the NCO content and the viscosity have no or little change, the isocyanate composition is considered to be stably stored, and the time length is recorded, i.e., the stable storage time. No or little change/reduction in the NCO content according to the present invention can mean that the NCO content is changed/reduced by not more than 5%; and it can be calculated by the following formula: the change/reduction in the NCO content by percent=(the initial NCO content - the NCO content after being stored for a period of time)/the initial NCO content. No or little change/increase in the viscosity according to the present invention can mean that the viscosity is changed/increased by not more than 50%; and it can be calculated by the following formula: the change/increase in the viscosity by percent=(the viscosity after being stored for a period of time - the initial viscosity)/the initial viscosity.

Comparative Example 1

100 parts by weight of liquid isocyanate raw material 44V20 was added into a plastic cup, and then 2 parts by weight of TBPB was added. The mixture was quickly stirred to be uniform and then placed into a 50°C oven. The viscosity change and the temperature change of the mixture were monitored. At intervals, samples were taken out, cooled to room temperature (25°C), and tested for the viscosity and the NCO content. The test results were shown in Table 1.

Table 1: test results of Comparative Example 1

| Time (day) | 0 | 7 | 21 | 35 | 49 | 56 |
|---|---|---|---|---|---|---|
| Temperature (°C) in the beginning | 50 | 50 | 50 | 50 | 50 | 50 |
| NCO value | 30.21 | 30.13 | 30.1 | 28.19 | 26.33 | 25.7 |
| Viscosity (mPa•S) | 194 | 225 | 250 | 2200 | 17000 | >100000 |
| Resin real-time temperature (°C) in the oven | 50 | 50 | 50 | 50 | 50 | 50 |

As could be seen from Table 1 above, the viscosity of the isocyanate increased significantly after a few weeks and had already been severely unsatisfactory with respect to quality standards. After 5 weeks, its NCO had reduced drastically and the viscosity had become too high to be used.

The infrared spectra in figure 1 could also verify these changes. Compared to the isocyanate in which no free radical initiator was added, the detection of the isocyanate in which the free radical initiator was added showed three characteristic peaks (1704.80 $cm^{-1}$, 1409.60 $cm^{-1}$ and 758.36 $cm^{-1}$) after 56 days, which showed the existence of the isocyanurate group, and verified that the trimerization reaction occurred and the isocyanurate group was formed under

the condition of the existence of the free radical. (Note: curve s1 in Figure 1 represents the spectrum of the system only containing the isocyanate 44V20; curve s2 in Figure 1 represents the spectrum in the initial stage after 2 wt% of TBPB was added to the isocyanate 44V20 based on the total weight of the isocyanate, where the viscosity had not changed yet; curve s3 in Figure 1 represents the spectrum after 56 days from the addition of 2 wt% of TBPB to the isocyanate 44V20 based on the total weight of the isocyanate.)

Based on this problem, it had occurred to us that it was attempted to add some auxiliary agents in small amounts to this isocyanate mixture, as shown in Example 1 below.

Example 1

100 parts by weight of liquid isocyanate raw material 44V20 was added into a plastic cup, and then 2 parts by weight of TBPB and 0.02 parts by weight of benzoyl chloride were added. The mixture was quickly stirred to be uniform and then placed into a 50°C oven. The viscosity change and the temperature change of the mixture were monitored. At intervals, samples were taken out, cooled to room temperature (25°C), and tested for the viscosity and the NCO content. The test results were shown in Table 2.

Table 2: test results of Example 1

| Time (day) | 0 | 14 | 28 | 42 | 56 |
|---|---|---|---|---|---|
| Temperature (°C) in the beginning | 50 | 50 | 50 | 50 | 50 |
| NCO value | 30.12 | 30.05 | 29.9 | 29.7 | 29.4 |
| Viscosity (mPa•S) | 198 | 209 | 226 | 255 | 279 |
| Resin real-time temperature (°C) in the oven | 50 | 50 | 50 | 50 | 50 |

As could be seen from the data in Table 2, the reaction speed of the isocyanate composition was controlled and the increase in viscosity was very limited, indicating that it could be stably stored with the addition of benzoyl chloride.

Polyol 1, HPMA, and NL-49P were premixed uniformly in a weight ratio of 90/73.4/0.15 and named component B (freshly prepared, not stored, specific parts by weight pbw were shown in the following table 3); component B was then allowed to stand at room temperature for 18 months to give component B*, which was then reacted with 44V20 and TBPB, the parts by weight of which were shown in table 3, and the pot-life was measured at 35°C, and the obtained data were shown in table 3.

Table 3. Test results of Comparative Example 2C and Examples 2-5 (in: parts by weight pbw)

| Examples | 2 | 2C | 3 | 4 |
|---|---|---|---|---|
| Component B | 163.5 | / | / | / |
| Component B* | / | 163.5 | 163.5 | 163.5 |
| 44V20 | 142.9 | 142.9 | 142.9 | 142.9 |
| TBPB | 2.7 | 2.7 | 2.7 | 2.7 |
| Benzoyl chloride | / | / | 0.0292 | 0.0584 |
| Pot-life (minutes) | 75 | 47 | 76 | 74 |

As could be known from Examples 2-4 and Comparative Example 2C of Table 3, the addition of acyl chloride (e.g., benzoyl chloride) could stabilize the pot life of the polyurethane reaction system having a relatively long storage period. Benzoyl chloride could be premixed with the isocyanate and the free radical initiator or alternatively added into component B, both of which could achieve the same effect. The pot-life of the polyurethane reaction system in which no acyl chloride was added was seriously reduced, and the requirement to the actual industrial production could not be met.

Although the preferred embodiment of the present invention has been disclosed as above, however it is not intended to limit the present invention. Anyone skilled in the art can make various changes and modifications without departing from the spirit and scope of the present invention. Therefore, the protection scope of the present invention shall be subject to the scope of the claims in the patent application.

## Claims

1. A method for stably storing an isocyanate composition comprising the following components:

   A1) one or more polyisocyanates;
   A2) at least one free-radical initiator;
   said method is to add A3) at least one acyl chloride to the isocyanate composition.

2. The method according to claim 1, wherein said A3) at least one acyl chloride is selected from formyl chloride, acetyl chloride, benzoyl chloride, benzenedicarbonyl dichloride, oxalyl chloride, chloroacetyl chloride, trichloroacetyl chloride, trifluoroacetyl chloride or a combination thereof.

3. The method according to claim 1 or 2, **characterized in that** the content of said A3) at least one acyl chloride is 0.001-3.5 wt%, preferably 0.003-3.0 wt%, more preferably 0.005-2.0 wt%, based on 100 wt% of the total weight of the isocyanate composition.

4. An isocyanate composition, comprising:

   A1) one or more polyisocyanates;
   A2) at least one free-radical initiator; and
   A3) at least one acyl chloride.

5. The isocyanate composition according to claim 4, **characterized in that** the content of said A3) at least one acyl chloride is 0.001-3.5 wt%, preferably 0.003-3.0 wt%, more preferably 0.005-2.0 wt%, based on 100 wt% of the total weight of the isocyanate composition.

6. The isocyanate composition according to claim 4 or 5, **characterized in that** the isocyanate composition containing at least one acyl chloride has a prolonged stable storage time at 50°C of ≥ 5 days, preferably ≥ 7 days, more preferably ≥ 14 days than the isocyanate composition not containing at least one acyl chloride.

7. Use of acyl chloride in inhibiting the trimerization of isocyanates catalyzed by a free-radical initiator.

8. A method for preparing a polyurethane resin, reacting a polyurethane reaction system comprising the following components to prepare the polyurethane resin:

   Component A), comprising: the isocyanate composition according to any of claims 4-6;
   Component B), comprising:

   B1) one or more organic polyols, the content of the organic polyol is 21-60 wt%, based on 100 wt% of the total weight of the polyurethane reaction system;
   B2) one or more compounds having the structure of formula (I)

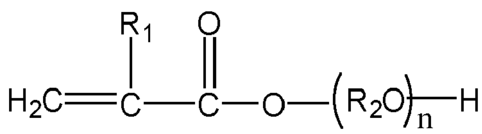

I ,

   Wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

9. The method according to claim 8, **characterized in that** the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

**10.** The method according to claim 8 or 9, **characterized in that** the polyurethane reaction system has a pot-life at 35°C of ≥ 60 minutes, preferably ≥ 65 minutes, more preferably ≥ 70 minutes.

**11.** The method according to claim 8 or 9, **characterized in that** compared to the pot-life at 35°C of the polyurethane reaction system not comprising at least one acyl chloride, the stability in the pot-life at 35°C of the polyurethane reaction system comprising at least one acyl chloride is increased by ≥ 30%, preferably ≥ 40%, more preferably ≥ 50%.

**12.** Use of acyl chloride for improving the stability in the pot-life of a polyurethane reaction system.

**13.** A method for stabilizing the pot-life of a polyurethane reaction system comprising the following components:

Component A), comprising:
A1) one or more polyisocyanates;
Component B), comprising:

B1) one or more organic polyols, the content of the organic polyol is 21-60 wt%, based on 100 wt% of the total weight of the polyurethane reaction system;
B2) one or more compounds having the structure of formula (I)

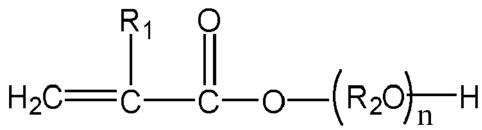

I ,

wherein, $R_1$ is selected from hydrogen, methyl or ethyl; $R_2$ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6; and Component C), a free-radical initiator;
said method is to add component D) at least one acyl chloride to the polyurethane reaction system.

**14.** A polyurethane resin obtained by the method for preparing a polyurethane resin according to any of claims 8-11.

**15.** A polyurethane product comprising the polyurethane resin of claim 14, **characterized in that** the polyurethane product is selected from cable trays, frames of doors, windows and curtain walls, frames of ladders, tent poles or pipes, anti-glare shields, floors, sucker rods, telegraph poles and cross arms, guardrails, gratings, architectural sectional materials, container sectional materials and sheets, bike racks, fishing rods, cable cores, insulator core rods, antenna housings, single-layer or sandwiched continuous sheets, and blade shells, webs, spar caps, auxiliary spars and blade roots of turbine fan blades.

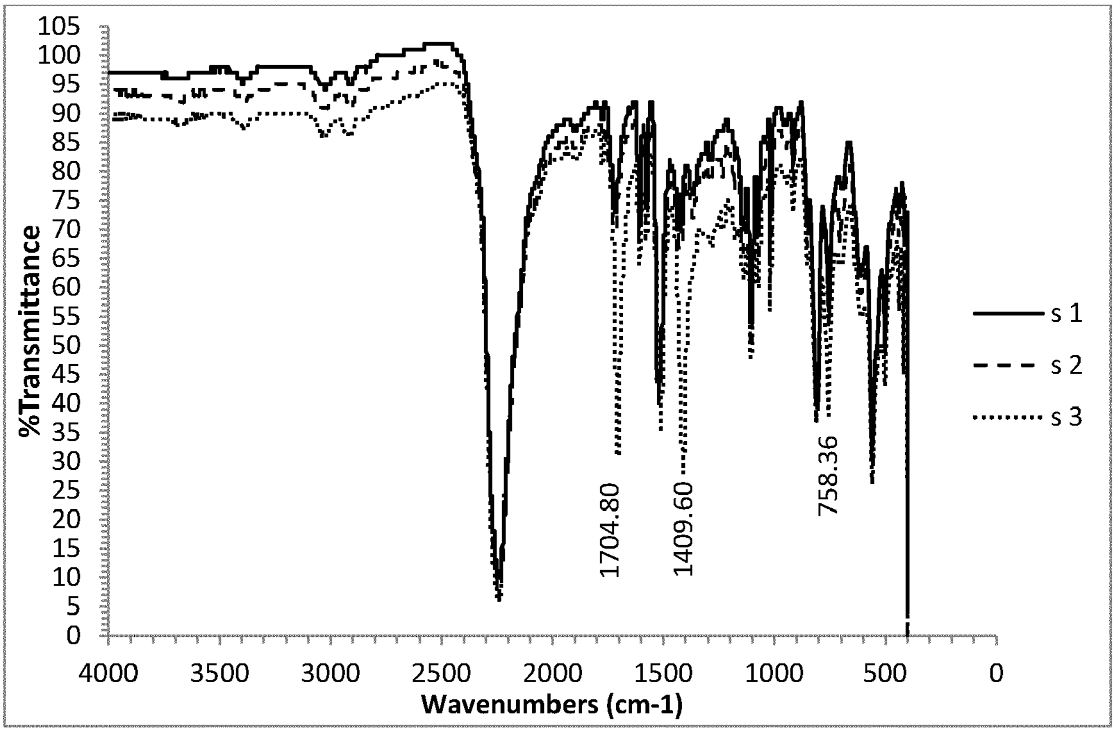
%Transmittance
105
100
95
90
85
80
75
70
65
60
55
50
45
40
35
30
25
20
15
10
5
0
4000
3500
3000
2500
2000
1500
1000
500
0
Wavenumbers (cm-1)
1704.80
1409.60
758.36
s 1
s 2
s 3

Fig. 1

Europäisches Patentamt
European Patent Office
Office européen des brevets

# EUROPEAN SEARCH REPORT

Application Number
EP 21 15 4030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 933 548 A (ANDERSON JR HARRY M ET AL) 20 January 1976 (1976-01-20)<br>* column 2, lines 35-46 * | 12 | INV.<br>C08G18/48<br>C08G18/76<br>C08G18/67<br>C08J3/24<br>C08K5/14<br>C08L75/14<br>C08L75/16 |
| X | US 2014/357810 A1 (OKUYAMA KENICHIROU [JP] ET AL) 4 December 2014 (2014-12-04)<br>* paragraph [0008] * | 12 | |
| A | WO 96/30438 A1 (ARISTECH CHEMICAL CORP [US]) 3 October 1996 (1996-10-03)<br>* claim 1 * | 1-15 | |
| A | GB 1 474 371 A (SHELL INT RESEARCH) 25 May 1977 (1977-05-25)<br>* claim 1; table II *<br>* page 3, lines 56-63 *<br>* page 4, lines 16-21 * | 1-15 | |
| A,D | CN 109 694 460 A (WANHUA CHEMICAL GROUP CO LTD) 30 April 2019 (2019-04-30)<br>* examples 2-7 *<br>* claims 1,8 * | 1-15 | TECHNICAL FIELDS SEARCHED (IPC)<br>C08G<br>C08K<br>C08J<br>C08L |

The present search report has been drawn up for all claims

1

| Place of search | Date of completion of the search | Examiner |
|---|---|---|
| Munich | 13 July 2021 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 15 4030

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2021

| Patent document cited in search report | | Publication date | Patent family member(s) | | | Publication date |
|---|---|---|---|---|---|---|
| US 3933548 | A | 20-01-1976 | NONE | | | |
| US 2014357810 | A1 | 04-12-2014 | CN | 104220188 | A | 17-12-2014 |
| | | | EP | 2829335 | A1 | 28-01-2015 |
| | | | JP | 6035324 | B2 | 30-11-2016 |
| | | | JP | WO2013141012 | A1 | 03-08-2015 |
| | | | US | 2014357810 | A1 | 04-12-2014 |
| | | | WO | 2013141012 | A1 | 26-09-2013 |
| WO 9630438 | A1 | 03-10-1996 | AT | 223939 | T | 15-09-2002 |
| | | | CA | 2190878 | A1 | 03-10-1996 |
| | | | DE | 69528177 | T2 | 02-01-2003 |
| | | | EP | 0776345 | A1 | 04-06-1997 |
| | | | ES | 2182917 | T3 | 16-03-2003 |
| | | | JP | H10501024 | A | 27-01-1998 |
| | | | US | 5447921 | A | 05-09-1995 |
| | | | US | 5482648 | A | 09-01-1996 |
| | | | WO | 9630438 | A1 | 03-10-1996 |
| GB 1474371 | A | 25-05-1977 | BE | 817147 | A | 02-01-1975 |
| | | | CA | 1037639 | A | 29-08-1978 |
| | | | DE | 2432952 | A1 | 30-01-1975 |
| | | | FR | 2236885 | A1 | 07-02-1975 |
| | | | GB | 1474371 | A | 25-05-1977 |
| | | | IT | 1015748 | B | 20-05-1977 |
| | | | JP | S5039400 | A | 11-04-1975 |
| | | | NL | 7409243 | A | 14-01-1975 |
| CN 109694460 | A | 30-04-2019 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109694460 A
- CN 1036404 C
- CN 110078881 A
- CN 109810237 A


### Non-patent literature cited in the description


- *CHEMICAL ABSTRACTS,* 98-88-4
- **LIU YIJUN.** Manual of Polyurethane Raw Materials and Additives. 01 April 2005
- **LIU HOUJUN.** Polyurethane Elastomer. August 2012